Europäisches Patentamt

European Patent Office

Office européen des brevets

(19)

(11) Veröffentlichungsnummer: **0 057 765**
**B1**

(12) # EUROPÄISCHE PATENTSCHRIFT

(45) Veröffentlichungstag der Patentschrift:
**22.05.85**

(21) Anmeldenummer: **81109779.9**

(22) Anmeldetag: **19.11.81**

(51) Int. Cl.⁴: **B 61 D 17/02**, B 61 D 17/00

(54) **Schienenfahrzeug.**

(30) Priorität: **10.02.81 DE 3104603**

(43) Veröffentlichungstag der Anmeldung:
**18.08.82 Patentblatt 82/33**

(45) Bekanntmachung des Hinweises auf die Patenterteilung:
**22.05.85 Patentblatt 85/21**

(84) Benannte Vertragsstaaten:
**BE FR GB IT**

(56) Entgegenhaltungen:
**DE - A - 2 542 780**
**DE - A - 2 558 664**
**DE - B - 1 286 917**
**DE - C - 952 910**
**US - A - 2 318 863**

(73) Patentinhaber: **Messerschmitt-Bölkow-Blohm**
**Gesellschaft mit beschränkter Haftung,**
**Robert-Koch-Strasse, D-8012 Ottobrunn (DE)**

(72) Erfinder: **Hassel, Helmut, Dr., Bodenehrstrasse 20,**
**D-8850 Donauwörth (DE)**
Erfinder: **Klapper, Helmut, Heckenrosenstrasse 7,**
**D-8850 Donauwörth (DE)**

ACTORUM AG

## Beschreibung

Die Erfindung bezieht sich auf ein Schienenfahrzeug und insbesondere einen Hochgeschwindigkeits-Reisezugwagen, mit einer die Fahrzeugräder abdeckenden, nach aussen rundum geschlossenen Verkleidung.

Hochgeschwindigkeits-Schienenfahrzeuge werden zum Zwecke des Schallschutzes, vor allem aber aus aerodynamischen Gründen auf der Wagenunterseite mit einer weitgehend geschlossenen Verkleidung versehen, die zumeist aus einer durchgehenden, die unterhalb des Fahrzeugbodens liegenden Zusatzaggregate aufnehmenden Bodenwanne besteht, welche im Drehgestellbereich eine seitlich durch fahrzeugfeste, bis kurz über die Schienenoberkante reichende Abdeckelemente begrenzte Drehgestellmulde aufweist, wodurch der Luftwiderstand des Schienenfahrzeugs merklich reduziert wird. Die nachteilige Folge einer solchen aerodynamischen und/oder Schallschutzverkleidung aber ist, dass die innerhalb der Verkleidung liegenden, überhitzungsgefährdeten Teile, also insbesondere die Radbremsen beim Abbremsen aus höheren Geschwindigkeiten, nicht mehr genügend luftgekühlt werden.

Die Erfindung hat sich die Aufgabe gestellt, ein Schienenfahrzeug der eingangs erwähnten Art so auszubilden, dass eine ausreichende Kühlluftdurchströmung der Verkleidung ohne störende Erhöhung des Luftwiderstands des Schienenfahrzeugs sichergestellt wird.

Zur Lösung dieser Aufgabe ist das Schienenfahrzeug der beanspruchten Art erfindungsgemäss dadurch gekennzeichnet, dass im Bereich der Verkleidung mindestens ein unabhängig von den Ausschlagbewegungen der Radsätze selbsttätig ein- und ausfahrbares, in der Ausfahrlage eine Luftanströmung der Radbremsen bewirkendes Windleitelement mit zugeordnetem, in Abhängigkeit vom Bremszustand gesteuerten Betätigungsmechanismus angeordnet ist.

Erfindungsgemäss wird durch die Anordnung und spezielle Betätigung der Windleitelemente eine wirksame Luftkühlung der Radbremsen gewährleistet, mit der Besonderheit, dass die Windleitelemente nur während des Bremsvorgangs ausgefahren sind und eine dann ja erwünschte Erhöhung des Luftwiderstandes bewirken, sich im übrigen aber in einer strömungsgünstigen Lage innerhalb oder bündig mit der Verkleidung befinden. Auf diese Weise wird in dem von der Verkleidung umschlossenen, weitgehend luftstromgeschützten Raum in den zur Kühlung der überhitzungsgefährdeten Teile erforderlichen Zeitabschnitten eine kräftige Kühlluftdurchströmung erzeugt.

Vorzugsweise sind als Windleitelemente gemäss Anspruch 2 in den seitlichen Radverkleidungsabschnitten angeordnete, selektiv verschwenkbare Ausstellklappen vorgesehen und, falls – wie bevorzugt – die Verkleidung fest mit der Fahrzeugunterseite verbunden ist und eine gebogene Bodenwanne mit einer Drehgestellmulde sowie diese seitlich nach aussen abschliessende, im wesentlichen gerade Abdeckelemente enthält, ist der an die Bodenwanne angrenzende Übergangsbereich der Abdeckelemente gemäss Anspruch 3 in besonders zweckmässiger Weise als mit dem vorderen, bodenwannenseitigen Ende nach aussen schwenkbare, mit dem hinteren Ende am Abdeckelement drehbar gelagerte Ausstellklappe ausgebildet, was den Vorteil hat, dass die Ausstellklappen in der ausgeschwenkten Lage einen in Fahrtrichtung grossen Lufteinlaufquerschnitt freigeben, aber dennoch nicht oder nur allenfalls geringfügig über die Fahrzeugaussenkante vorstehen.

Im Hinblick auf eine gezielte Luftanströmung ist die Ausstellklappe gemäss Anspruch 4 vorzugsweise auf der Innenseite mit einem in Richtung der Radbremsen weisenden Umlenkblech versehen.

Wahlweise, vorzugsweise aber zusätzlich ist gemäss Anspruch 5 als Windleitelement ein in Fahrtrichtung vor den Fahrzeugrädern angeordnetes, während des Bremsvorgangs unter die Unterseite der Verkleidung absenkbares Windleitblech vorgesehen.

Im einfachsten Fall ist die Ein- und Ausfahrbewegung der Windleitelemente mit der Bremsbetätigung gekoppelt. Da jedoch die Wärmeentwicklung an den Bremsen von der Fahrgeschwindigkeit und der Stärke der Bremsbetätigung abhängt, empfiehlt es sich, im Hinblick auf eine verfeinerte Steuerung gemäss Anspruch 6, den Windleitelementen einen temperatur-, fahrgeschwindigkeits- und/oder zeitabhängig gesteuerten Stellantrieb zuzuordnen, wobei die zeitabhängige Steuerung zum Zurückstellen der Windleitelemente mit einer bestimmten Zeitverzögerung nach Beginn des Bremsvorgangs benutzt wird oder bei anderen, überhitzungsgefährdeten Teilen nach einem vorgewählten Zeittakt arbeitet.

Zusätzlich oder wahlweise sind für abwärmeerzeugende Teile, zu deren Kühlung eine nur verhältnismässig schwache Luftanströmung benötigt wird, also vor allem zur Kühlung der Radlager, gemäss Anspruch 7 zweckmässigerweise in der Verkleidung dauernd geöffnete Lufteinlässe geringen aerodynamischen Widerstands ausgebildet.

Die Erfindung wird nunmehr anhand zweier Ausführungsbeispiele in Verbindung mit den Zeichnungen näher erläutert. Es zeigt:

Fig. 1 die Seitenansicht eines Hochgeschwindigkeits-Reisezugwagens in schematischer Darstellung;

Fig. 2 eine vergrösserte, teilweise gebrochene Seitenansicht des Drehgestellbereichs des in Fig. 1 gezeigten Reisezugswagens;

Fig. 3 einen schematischen Schnitt längs der Linie III–III der Fig. 2;

Fig. 4 einen schematischen Schnitt längs der Linie IV–IV der Fig. 2;

Fig. 5 eine der Fig. 3 entsprechende Darstellung eines weiteren Ausführungsbeispiels mit einer anders geformten Bodenwanne und einer abgewandelten Ausstellklappenanordnung; und Fig. 6 die Seitenansicht des Ausführungsbeispiels gemäss Fig. 5.

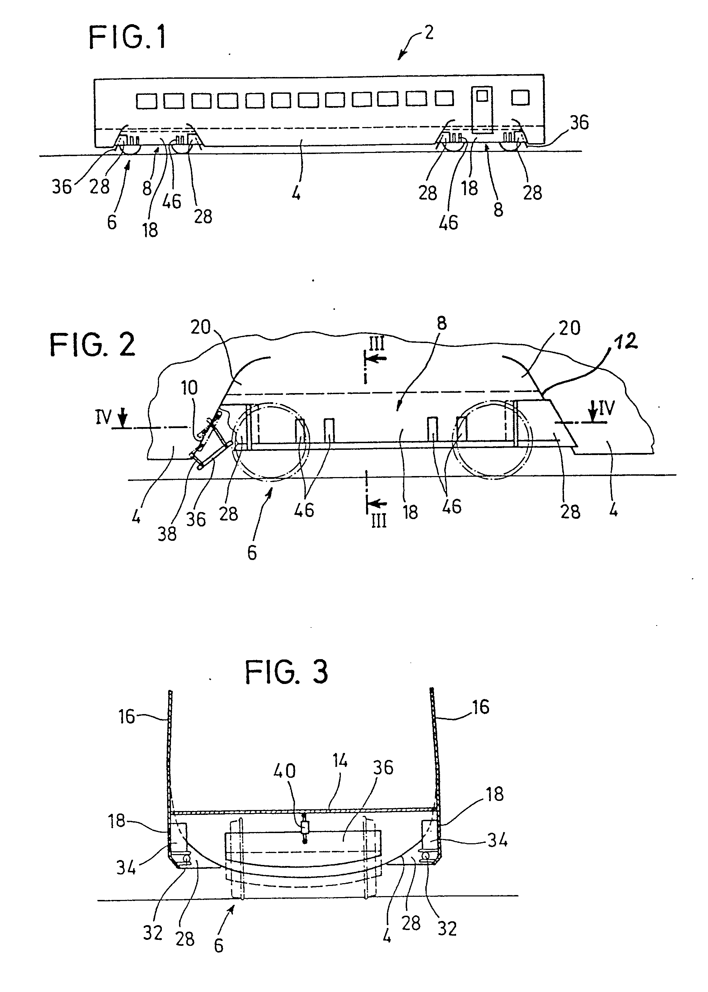

Der in den Fig. 1–4 gezeigten Hochgeschwindigkeits-Reisezugwagen 2 ist mit einer auf der Wagenunterseite befestigten, gebogenen Bodenwanne 4 versehen, die sich im wesentlichen über die gesamte Länge des Reisezugwagens erstreckt, im Bereich der Drehgestelle 6 aber durch eine Drehgestellmulde 8 unterbrochen ist, welche nach vorne und hinten durch schräg geneigte, die Bodenwanne abschliessende Stirnwände 10, 12, nach oben durch eine Zwischenwand 14 und seitlich durch an die Fahrzeugaussenwände 16 anschliessende, gerade nach unten verlaufende und am unteren Rand abgekantete Abdeckelemente oder -bleche 18 begrenzt ist. Die Bodenwanne 4 und die geraden Abdeckelemente 18, die sich am vorderen und hinteren Ende in einem Übergangsbereich 20 an das gebogene Bodenwannenprofil anschmiegen, bilden somit eine Verkleidung, durch die das Drehgestell 6 einschliesslich der Fahrzeugräder 22, der Scheibenbremsen 24 und der Achslager 26 auf eine aerodynamisch günstige, vor störenden Luftströmungen und -wirbelbildungen geschützte Weise in der zugeordneten Drehgestellmulde 8 untergebracht ist.

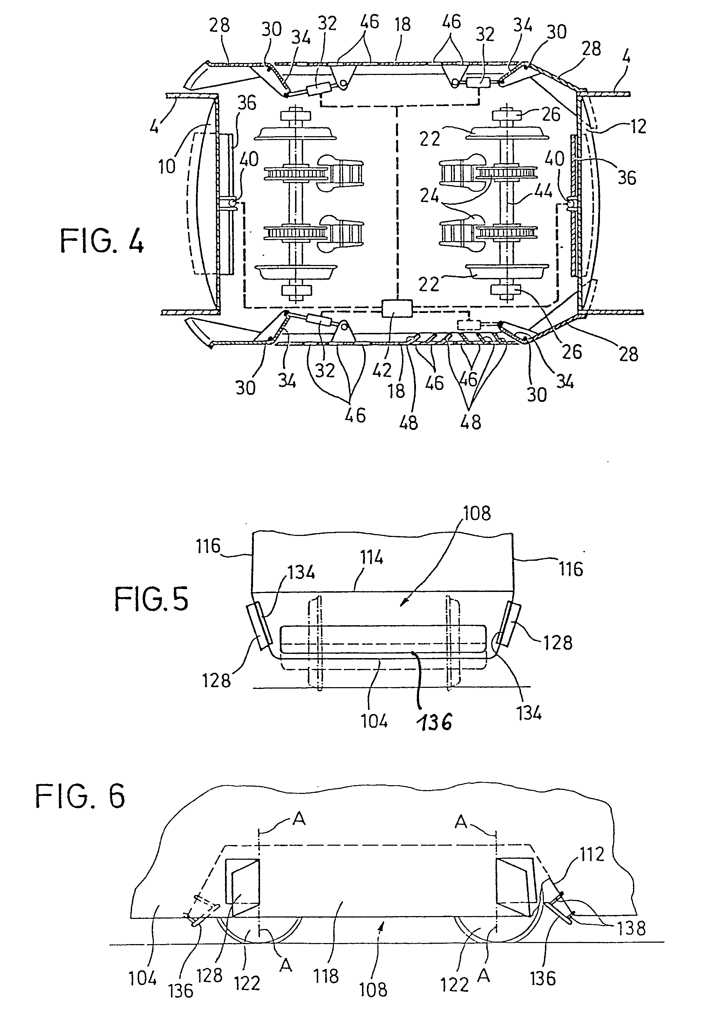

Um bei stärkerer Wärmeentwicklung der Scheibenbremsen 24, also vor allem beim Abbremsen aus höheren Geschwindigkeiten eine ausreichende Luftdurchströmung der Drehgestellmulde 8 und somit Kühlung der Scheibenbremsen 24 sicherzustellen, sind die Übergangsbereiche 20 der Abdeckelemente 18 etwa bis zur Höhe der (in den Fig. 1 und 2 gestrichelt gezeichneten) Zwischenwand 14 jeweils als Ausstellklappe 28 ausgebildet, welche mit ihrem vorderen, bodenwannenseitigen Ende nach aussen schwenkbar und mit ihrem hinteren Ende um einen Zapfen 30 am Abdeckelement 18 drehbar gelagert ist. Während des Bremsvorgangs werden zumindest die in Fahrtrichtung vorderen Ausstellklappen 28 durch den zugeordneten, hydraulischen oder pneumatischen Stellzylinder 32 geöffnet, wie dies für die im Sinne der Fig. 4 links liegenden Ausstellklappen 28 gezeigt ist, so dass die Scheibenbremsen 24 durch den über den grossen Einlaufquerschnitt zwischen Ausstellklappe 28 und Bodenwanne 4 einströmenden Fahrtwind wirksam gekühlt werden, wobei die Ausstellklappen 28 zur Verstärkung der Kühlwirkung auf der Innenseite noch zusätzlich mit einem in Richtung der Scheibenbremsen 24 weisenden Umlenkblech 34 versehen sind.

Ausserdem sind am vorderen und hinteren Ende der Drehgestellmulde 8 im Bereich der geneigten Stirnwände 10, 12 Windleitbleche 36 angeordnet, die etwa über Lenker 38 (Fig. 2) an der zugeordneten Stirnwand 10 bzw. 12 gelagert sind und durch einen ebenfalls wieder pneumatisch oder hydraulisch betätigten Stellzylinder 40 in der eingefahrenen Lage oberhalb der Bodenwannenunterseite gehalten werden, wie dies in Fig. 2 in gestrichelten, in Fig. 3 in durchgehenden und in Fig. 4 für das rechte Windleitblech 36 angedeutet ist, während bei einer Bremsbetätigung das in Fahrtrichtung vordere Windleitblech 36 mit Abstand zur Stirnwand 10 bzw. 12 bis unter die Unterseite der Bodenwanne 4 abgesenkt wird und dadurch die Kühlluftansteuerung der Bremsen innerhalb der Drehgestellmulde 8 weiter verstärkt.

Die Betätigung der Stellzylinder 32 und 40 wird von einer zentralen Steuereinheit 42 (Fig. 4) gesteuert, und zwar im einfachsten Fall in der Weise, dass die in Fahrtrichtung vorderen Windleitelemente 28, 36 zu Beginn des Bremsvorgangs aus- und am Ende des Bremsvorgangs wieder zurückgestellt werden. Im Hinblick auf eine verfeinerte Steuerung können aber die in Fahrtrichtung vorderen Windleitelemente 28, 36 auch in Abhängigkeit von der Bremstemperatur aus- und/oder zurückgeschwenkt werden oder die Steuereinheit 42 arbeitet fahrgeschwindigkeits- oder zeitabhängig derart, dass die Windleitelemente 28, 36 während des Bremsvorgangs nur für eine bestimmte Zeitdauer oder solange ausgeschwenkt bleiben, bis die Fahrgeschwindigkeit unter einen vorbestimmten Wert abgefallen ist.

Anders als die Bremsen 24 erfordern die Achslager 26, wenn überhaupt, eine wesentlich schwächere, meist jedoch kontinuierliche Luftkühlung. Zu diesem Zweck sind in den seitlichen Abdeckelementen 18 nahe der Drehgestellachsen 44 Lufteinlässe in Form eines oder mehrerer paralleler, schmaler Luftschlitze 46 ausgebildet, die eine längere oder sogar ständige, schwache Luftanblasung der Achslager 26 sicherstellen, auf den aerodynamischen Widerstand im wesentlichen jedoch ohne Einfluss sind. Wie im rechten, unteren Teil der Fig. 4 gezeigt, können auf der Innenseite der Abdeckelemente 18 im Bereich der Luftschlitze 46 Umlenkbleche 48 angeordnet sein, die eine gezielte Luftanblasung der Achslager 26 unabhängig von der Fahrtrichtung des Schienenfahrzeugs sicherstellen.

Bei dem Ausführungsbeispiel nach den Fig. 5 und 6, wo die dem ersten Ausführungsbeispiel entsprechenden Bauteile durch das gleiche, jedoch um 100 erhöhte Bezugszeichen gekennzeichnet sind, hat die Bodenwanne 104 anstatt eines gebogenen einen trogförmigen, aus geraden Abschnitten zusammengesetzten Querschnitt und die seitlichen Abdeckelemente 118 der Drehgestellmulde 108 sind schräg nach unten und innen geneigt und bilden eine glattflächige Verlängerung der Seitenabschnitte der Bodenwanne 104. Im Bereich der Drehgestellachsen sind in den Abdeckelementen 118 wiederum Ausstellklappen 128 ausgebildet, die um eine Achse A–A schwenkbar sind, so dass die in Fahrtrichtung vordere Ausstellklappe während des Bremsvorgangs entgegen der Luftströmung geöffnet werden kann, während die in Fahrtrichtung untere Klappe 128 entgegengesetzt zur vorderen geöffnet wird und dadurch ein Hinausströmen der Kühlluft ermöglicht, wobei die Klappen 128 in dieser Lage nur höchstens einige cm über die Fahrzeugaussenkante vorstehen, wie dies in Fig. 5 für die in der ausgeschwenkten Lage dargestellten Ausstellklappen angedeutet ist. Im übrigen ist die Bau- und Funktionsweise der Ausstellklappen 128 sowie der ebenfalls wieder an den Enden der Drehgestellmulde 108 angeordneten, querverlaufenden Windleitbleche 136 einschliesslich der zugeordneten Steuerung im wesentlichen die gleiche wie bei dem Ausführungsbeispiel gemäss den Fig. 1–4.

## Patentansprüche

1. Schienenfahrzeug, insbesondere Hochgeschwindigkeits-Reisezugwagen, mit einer die Fahrzeugräder abdeckenden, nach aussen rundum geschlossenen Verkleidung, dadurch gekennzeichnet, dass im Bereich der Verkleidung (4, 18; 104, 118) mindestens ein unabhängig von den Ausschlagbewegungen der Radsätze (22) selbsttätig ein- und ausfahrbares, in der Ausfahrlage eine Luftanströmung der Radbremsen (24) bewirkendes Windleitelement (28, 36; 128, 136) mit zugeordnetem, in Abhängigkeit vom Bremszustand gesteuerten Betätigungsmechanismus (32, 40, 42) angeordnet ist.

2. Schienenfahrzeug nach Anspruch 1, dadurch gekennzeichnet, dass als Windleitelement eine in den seitlichen Radverkleidungsabschnitten (18; 118) angeordnete, selektiv verschwenkbare Ausstellklappe (28; 128) vorgesehen ist.

3. Schienenfahrzeug nach Anspruch 2, bei dem die Verkleidung fest mit der Wagenunterseite verbunden ist und eine gebogene Bodenwanne mit einer Drehgestellmulde sowie diese seitlich nach aussen abschliessende, im wesentlichen gerade Abdeckelemente enthält, dadurch gekennzeichnet, dass der an die Bodenwanne (4) angrenzende Übergangsbereich (20) der Abdeckelemente (18) als mit dem vorderen, bodenwannenseitigen Ende nach aussen schwenkbare, mit dem hinteren Ende am Abdeckelement drehbar gelagerte Ausstellklappe (28) ausgebildet ist.

4. Schienenfahrzeug nach Anspruch 2 oder 3, dadurch gekennzeichnet, dass die Ausstellklappe (28) auf der Innenseite mit einem in Richtung der Radbremsen (24) weisenden Umlenkblech (34) versehen ist.

5. Schienenfahrzeug nach einem der vorhergehenden Ansprüche, dadurch gekennzeichnet, dass als Windleitelement ein in Fahrtrichtung vor den Fahrzeugrädern (22; 122) angeordnetes, während des Bremsvorgangs unter die Unterseite der Verkleidung (4, 18; 104, 118) absenkbares Windleitblech (36; 136) vorgesehen ist.

6. Schienenfahrzeug nach einem der vorhergehenden Ansprüche, dadurch gekennzeichnet, dass dem bzw. den Windleitelementen (28, 36; 128, 136) ein temperatur-, fahrgeschwindigkeits- und/oder zeitabhängig gesteuerter Stellantrieb (32, 40, 42) zugeordnet ist.

7. Schienenfahrzeug nach einem der vorhergehenden Ansprüche, dadurch gekennzeichnet, dass zur Kühlung der Radlager (26) in der Verkleidung (4, 18) dauernd geöffnete Lufteinlässe (46) geringen aerodynamischen Widerstands ausgebildet sind.

## Revendications

1. Véhicule ferroviaire, en particulier voiture de voyageurs pour grandes vitesses, comprenant une carène fermée tout autour vers l'extérieur recouvrant les roues du véhicule, caractérisé par le fait que dans la zone de la carène (4, 18; 104, 118) est installé au moins un élément déflecteur de vent (28, 36; 128, 136) entrant et sortant automatiquement indépendamment des mouvements de braquage des roues (22), provoquant en position sortie un écoulement d'air sur les freins (24) des roues et comportant un mécanisme d'actionnement (32, 40, 42) y associé commandé en fonction de la position du frein.

2. Véhicule ferroviaire selon la revendication 1, caractérisé par le fait que comme élément déflecteur de vent on prévoit un volet de réglage (28; 128) placé dans les sections latérales (18; 118) de la carène des roues et pivotable sélectivement.

3. Véhicule ferroviaire selon la revendication 2, dans lequel la carène est solidairement raccordée à la face inférieure de la voiture et comprend un fond bombé en forme de cuvette muni d'un logement pour le bogie ainsi que des éléments de recouvrement sensiblement rectiligne fermant celui-ci latéralement vers l'extérieur, caractérisé par le fait que la zone de transition (20, contiguë au fond (4) en forme de cuvette, des éléments de recouvrement (18) est réalisée sous la forme d'un volet de réglage (28) pivotable vers l'extérieur à son extrémité avant, côté fond en forme de cuvette, et monté rotatif par son autre extrémité sur l'élément de recouvrement.

4. Véhicule ferroviaire selon la revendication 2 ou 3, caractérisé par le fait que le volet de réglage (28) est muni sur sa face interne d'une tôle déflectrice (34) orientée en direction des freins (24) des roues.

5. Véhicule ferroviaire selon l'une des revendications précédentes, caractérisé par le fait que comme élément déflecteur de vent, on prévoit une tôle paravent (36; 136) disposée devant les roues (22, 122) du véhicule dans le sens de la marche et pouvant, pendant le freinage, être abaissée sous la face inférieure de la carène (4, 18; 104, 118).

6. Véhicule ferroviaire selon l'une des revendications précédentes, caractérisé par le fait qu'au ou aux élément(s) déflecteur(s) de vent (28, 36; 128, 136) est associé un servomoteur (32, 40, 42) commandé en fonction de la température, de la vitesse de roulement et/ou du temps.

7. Véhicule ferroviaire selon l'une quelconque des revendications précédentes, caractérisé par le fait que pour le refroidissement des boîtes d'essieux (26), des entrées d'air (46) ouvertes en permanence et de faible résistance aérodynamique sont prévues dans la carène (4,18).

## Claims

1. A rail vehicle, more especially a high-speed passenger train carriage, comprising a casing which masks the vehicle wheels and which is closed outwardly all round, characterised in that arranged in the region of the casing (4, 18, 104, 118) is at least one wind directing member (28, 36, 128, 136) which can be run in and out automatically independently of the deflection movements of wheel sets (22) and which in the run-out position brings about an incident flow of air against wheel brakes (24) with an associated actuating mechanism (32, 40, 42) which is controlled as a function of the braking state.

2. A rail vehicle according to claim 1, characterised in that a selectively swingable deployment flap (28; 128) which is arranged in the lateral wheel casing portions (18, 118) is provided as the wind directing member.

3. A rail vehicle according to claim 2, in which the casing is connected securely to the underside of the carriage and contains a curved floor or base pan with a bogie trough, as well as substantially straight masking members which close off floor pan laterally outwardly, characterised in that the transitional region (20) of the masking members (18) which is contiguous to the floor pan (4) is a deployment flap (28) which is outwardly swingable with the front floor-pan-side end and which is pivotally mounted with its rear end on the masking members.

4. A rail vehicle according to claim 2 or 3, characterised in that the deployment flap (28) is provided on the inside with a baffle plate (34) which points in the direction of the wheel brakes (24).

5. A rail vehicle according to one of the preceding claims, characterised in that a wind directing plate or wind baffle (36, 136) which is arranged in the direction of travel in front of the vehicle wheels (22, 122) and which can be lowered during the braking procedure under the underside of the casing (4, 18, 104, 118) is provided as the wind directing member.

6. A rail vehicle according to one of the preceding claims, characterised in that an adjusting drive (32, 40, 42) which is controlled in a temperature-dependent, speed-dependent and/or time-dependent manner is associated with the wind directing member or members (28, 36, 128, 136).

7. A rail vehicle according to one of the preceding claims, characterised in that for the cooling of wheel bearings (26) permanently opened air inlets (46) of slight aerodynamic resistance are fashioned in the casing (4, 18).

# FIG.1

# FIG. 2

# FIG. 3

FIG. 4

FIG.5

FIG. 6